# EUROPÄISCHE PATENTSCHRIFT

(11) **EP 3 673 098 B1**
(45) Veröffentlichungstag und Bekanntmachung des Hinweises auf die Patenterteilung: **06.12.2023**
(21) Anmeldenummer: 18769595.2
(22) Anmeldetag: 24.08.2018
(51) Int. Cl.: C25B 1/26, C25B 15/08, C25B 9/19, C02F 1/461, C02F 1/467

(54) **VORRICHTUNG ZUR GEWINNUNG VON PRODUKTEN DER ELEKTROLYSE VON ALKALIMETALLCHLORIDLÖSUNG**
DEVICE FOR THE RECOVERY OF PRODUCTS OF THE ELECTROLYSIS OF AN ALKALI METAL CHLORIDE SOLUTION
DISPOSITIF POUR L'OBTENTION DES PRODUITS DE L'ÉLECTROLYSE D'UNE SOLUTION DE CHLORURE DE MÉTAL ALCALIN

(30) Priorität: 25.08.2017 DE 102017119566
(43) Veröffentlichungstag der Anmeldung: 01.07.2020
(73) Patentinhaber: Blue Safety GmbH, 48153 Münster (DE)
(72) Erfinder: BAKHIR, Vitold, Moscow 123103 (RU)
(74) Vertreter: Gulde & Partner
(86) Internationale Anmeldenummer: PCT/EP2018/072925
(87) Internationale Veröffentlichungsnummer: WO 2019/038440

(56) Entgegenhaltungen:
- DE-A1-102015 003 911
- US-A1- 2014 013 580
- US-B2- 7 897 023

## Beschreibung

Die Erfindung bezieht sich auf das Gebiet der chemischen Technologie und betrifft eine Vorrichtung für die Elektrolyse wässriger Alkalimetallchloridlösungen, um Chlor, Chlorverbindungen, Sauerstoff, Ozon und Hydroperoxidverbindungen herzustellen, und kann in der Medizin, der Lebensmittelindustrie sowie bei der Behandlung (Reinigung) und Keimfreimachung von Wasser eingesetzt werden.

Bekannt sind Verfahren zur Herstellung von Desinfektionslösungen auf der Basis von Produkten der Anodisierung von Alkalimetallchloridlösungen durch die Behandlung der Ausgangslösungen im Anodenraum von im Diaphragmaverfahren betriebenen Elektrolyseapparaten unter Verwendung unterschiedlicher Hydraulikschemata, in die diese Elektrolyseapparate integriert sind.

So ist in RU 2 148 027 C1 ein Herstellungsverfahren für das Desinfektionsmittel offenbart und eine Vorrichtung für dessen Herstellung beschrieben. Die Erfindung beschreibt die Zubereitung der Ausgangslösung durch Mischen von Trinkwasser mit Alkalimetallchloridlösung sowie die konsequente Behandlung (Verarbeitung) der gewonnenen Ausgangslösung im Anodenraum des im Diaphragmaverfahren betriebenen Hauptelektrolyseapparates und anschließend im Anodenraum des im Diaphragmaverfahren betriebenen Nebenelektrolyseapparates. Dabei sind die Kathodenräume beider Elektrolyseapparate mit einem Hilfselektrolytbehälter (Katholytbehälter) verbunden und arbeiten durch den Konvektions- und Gasliftstrom in den Elektrodenräumen des Elektrolyseapparates zirkulierend. Die Parameter der herzustellenden Desinfektionslösung werden durch Mischung der Ausgangslösung mit dem Katholyt aus dem Kreislauf, der für den Haupt- und Nebenelektrolyseapparat einheitlich ist, reguliert. Das Einbringen des basischen Katholyts in die Ausgangslösung ermöglicht es, den pH-Wert des Endproduktes, des Desinfektionsmittels, zu steuern. Der Differenzdruck auf dem keramischen Ultrafiltrationsdiaphragma im Bereich von 0,1 bis 1,4 kgs/cm² des Nebenelektrolyseapparates schafft ein Druckgefälle im Porenraum des Diaphragmas, das eine ionenselektive (ionensensitive) Ladungsübertragung durch die Kationen (Natriumionen) aus dem Anodenraum in den Kathodenraum sicherstellt. Das keramische Ultrafiltrationsdiaphragma wird zu einer effizienten ionenselektiven Trennwand (hier kationaktive Membran) bei Betrieb im elektrischen Feld in Überlagerung mit dem Filtrationsfeld, das durch den Differenzdruck vorgegeben ist. Die vorliegende technische Lösung ermöglicht es, Lösungen mit geringer Korrosivität durch Aufrechterhaltung des pH-Wertes der Ziellösung im neutralen Bereich herzustellen. Ein Nachteil dieser technischen Lösung besteht darin, dass im Zielprodukt (Desinfektionslösung) neben den Abbauprodukten im Anodenraum ungefähr in gleicher Menge Begleitstoffe (Natriumchlorid) entstehen, was durch das Verfahren der kontinuierlichen Flüssigumwandlung der Ausgangsstoffe in der verfahrenstechnischen Kette der Vorrichtung bedingt ist.

Ein Nachteil der bekannten Lösung ist ebenfalls, dass es schwierig ist, die Betriebsparameter des Systems zu stabilisieren, die sich im Zeitverlauf spontan verändern, insbesondere bei Schwankungen des Mineralgehalts, die durch die Veränderungen der chemischen Zusammensetzung des Trinkwassers hervorgerufen werden. Das Vorhandensein eines gemeinsamen Katholyt-Zirkulationsgefäßes für den Haupt- und Nebenelektrolyseapparat erfordert viel Zeit für die Stabilisierung des Betriebs des Systems bei jedem Einschalten bzw. bei Änderung der Betriebsweise des Systems (Veränderung der Stromstärke, der Durchflussrate), in deren Verlauf eine unkontrollierte Wanderung der bivalenten Kationen der Metalle aus den Kathodenräumen in die Anodenräume vor sich geht. Diese Erscheinung verringert die Dauer der Aufrechterhaltung der sporoziden Aktivität des gewonnenen Desinfektionsmittels, da das Vorhandensein von bivalenten Metallionen in der Oxidationsmittellösung den Abbau (chemischen Zerfall) der hypochlorigen Säure beschleunigt. Auch bei Stillstand des elektrochemischen Systems lagern sich Kationenhydroxide der polyvalenten Metalle in den Poren des Diaphragmas bei wechselseitiger transmembraner Beeinflussung der konzentrierten Lauge (Katholyt) mit dem verdünnten Elektrolyten im Anodenraum (Anolyt) ab. Diese Erscheinung führt ebenfalls zu einer Verschlechterung der Betriebsparameter des Systems im Zeitverlauf und zu einer notwendigen periodischen Reinigung der Kathodenräume der elektrochemischen Reaktoren mit Säurelösung.

Technisch und dem zu erzielenden Ergebnis nach kommt die Vorrichtung aus US 7,897,023 B2, die als Prototyp gewählt wurde, der beanspruchten Vorrichtung am nächsten. Die genannte Vorrichtung enthält einen elektrochemischen Reaktor, der von einem oder mehreren modularen elektrochemischen Elementen (Zellen) repräsentiert wird, die hydraulisch parallel verbunden sind, der Anoden- und Kathodenraum des Reaktors ist durch eine röhrenförmige, poröse keramische Trennwand getrennt, die koaxial zwischen den Elektroden der Zellen angeordnet ist, der Eingang des Anodenraums ist mit der Vorrichtung für die Zuführung der Salzlösung unter Druck, der Ausgang mit der Vorrichtung zur Stabilisierung des vorgegebenen Überdrucks im Anodenraum verbunden. Die Vorrichtung hat einen Katholytkreislauf, der den Kathodenraum des elektrochemischen Reaktors, einen kapazitiven (Volumen-) Separator für die Trennung des Wasserstoffs vom Katholyt, eine Einrichtung zur Ableitung des überschüssigen Katholyts aus dem Kreislauf, einen Wärmetauscher zur Kühlung des umlaufenden Katholyts sowie eine Vorrichtung zum Mischen der gasförmigen Produkte der elektrochemischen anodischen Reaktionen mit dem Süßwasserstrom einschließt. Die genannte Vorrichtung kann auch einen Dosierapparat für die Zugabe des Katholyts zur Oxidationsmittellösung zwecks Regulierung des pH-Wertes einschließen.

Nachteile dieser Vorrichtung bestehen in der erheblichen Ungleichheit der lokalen Werte für die Stromdichte bezogen auf die Höhe des elektromagnetischen Reaktors wegen der geringen Geschwindigkeit der Konvektions- und Gasliftzirkulation des Katholyts in den Elektrodenräumen der Reaktorzellen. Im unteren Teil des Reaktors, wo die Menge des sich abscheidenden Wasserstoffs relativ gering ist, ist die Stromdichte um ein Vielfaches höher als im oberen Teil des Elektrodenraums, wo der sich abscheidende Wasserstoff einen beachtlichen Strömungswiderstand des elektrischen Stroms bildet. Diese Erscheinung beschränkt die zulässige Strombelastung für den Reaktor, was dazu führt, dass er mit herabgesetzter Leistung betrieben werden muss. Durch die Vergrößerung des elektrischen Widerstands im oberen Teil des Reaktors erfolgt ein Überhitzen des Elektrolyts im unteren Teil des Kathodenraums und in der Folge eine Erhitzung der Ausgangssalzlösung, die in den unteren Teil der Anodenräume des Reaktors durch Wärmeübertragung durch das keramische Diaphragma gelangt. Das führt bei der Elektrolyse zu einer verstärkten Bildung von für das Endprodukt schädlichen Chloraten. Beim intermittierenden Betrieb der Vorrichtung erfolgt eine Wechselwirkung des Katholyts, das durch eine konzentrierte Natriumhydroxid-Lösung repräsentiert ist, mit dem Elektrolyten im Anodenraum. Das führt dazu, dass sich im Porenraum des Diaphragmas unlösliche Hydroxide von polyvalenten Metallen bilden und dass sich die Poren in den Diaphragmen des Reaktors zusetzen.

Ein Ziel der Erfindung ist die Erhöhung der Reaktorleistung bei gleichzeitiger Verbesserung der Qualität des Endprodukts, der Desinfektionslösung der Oxidationsmittel durch Verringerung des Gehalts an Nebenkomponenten in Form von Chloridionen, Chloraten und Alkalimetallkationen.

Das technische Ergebnis der Erfindung wird dadurch erreicht, dass im Unterschied zu der bekannten technischen Lösung der Katholytkreislauf (Kathodenkreislauf) eine Umlaufförderpumpe mit Überlaufvorrichtung für den Rücklauf der Pumpflüssigkeit enthält, die den Zwangsumlauf der Katholyts kontinuierlich über den Wärmetauscher, den Kathodenraum und den kapazitiven (Volumen-) Separator zur Trennung des Wasserstoffs vom Katholyt sicherstellt, dabei liegt der Annahmebehälter des Separators, der mit dem Pumpeneingang verbunden ist, tiefer als der elektrochemische Reaktor, und zwar so, dass der Pegel des Katholyts im Annahmebehälter des Separators, der durch die Lage des Stutzens (Ansatzrohrs) für die Ableitung des überschüssigen Katholyts aus dem Kreislauf bestimmt wird, unter dem Einlaufstutzen (den Einlaufstutzen) in den Kathodenraum des elektrochemischen Reaktors liegt, und in der Leitung für die Ableitung des Wasserstoffs aus dem kapazitiven (Volumen-) Separator zur Trennung des Wasserstoffs vom Katholyt ein gekühlter Feuchtigkeitsabscheider angeordnet ist, dessen Kondensatsammelbehälter über eine Dosierpumpe mit der Süßwasserzuleitung zur Mischvorrichtung des Süßwasserstroms mit dem gasförmigen Oxidationsmittelgemisch verbunden ist.

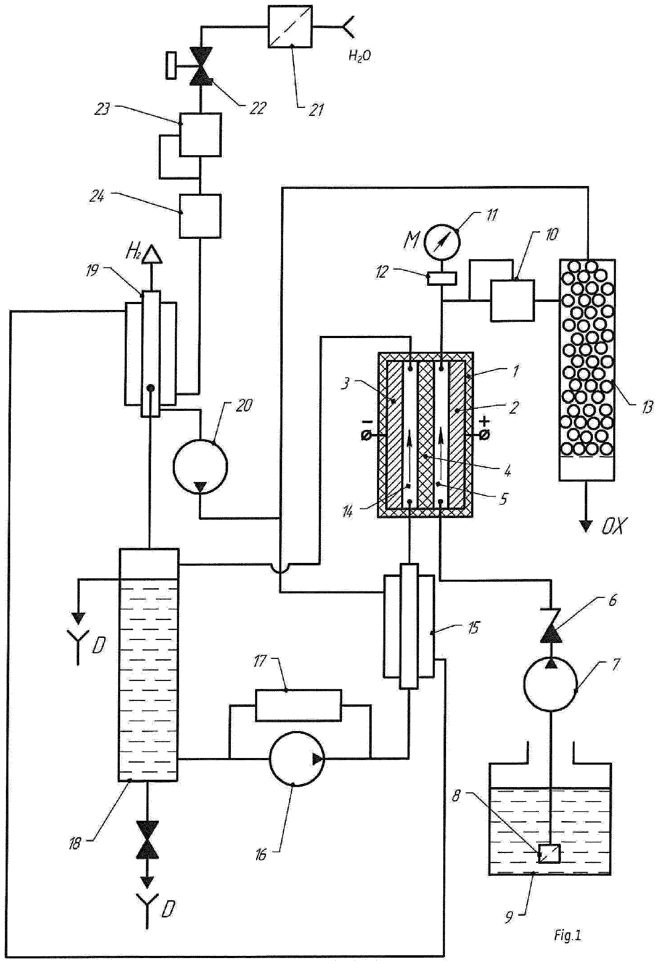

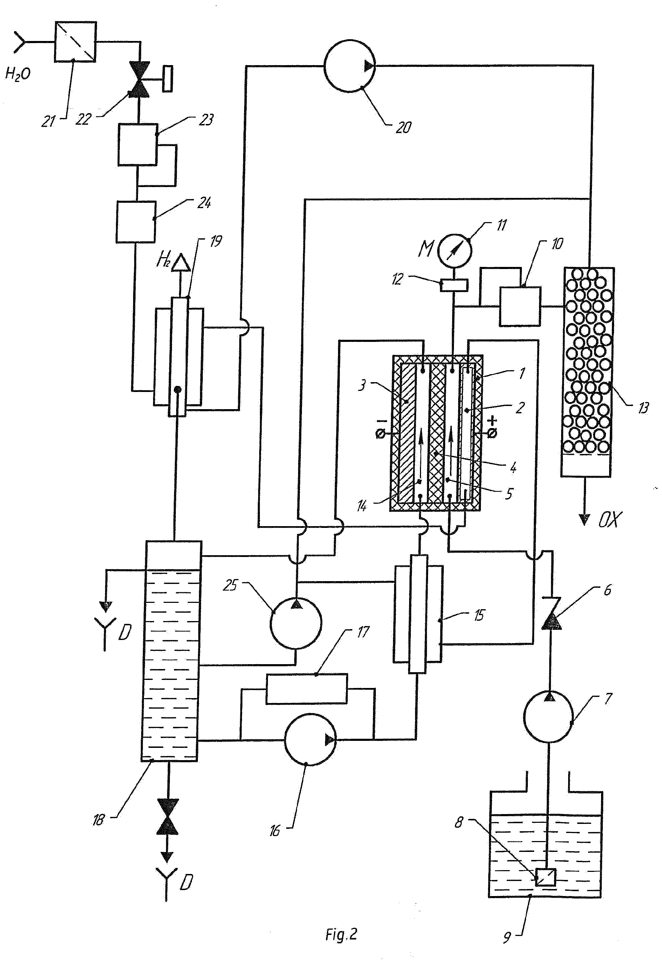

In Fig. 1 ist das Aufbauschema der Vorrichtung mit Reaktor dargestellt, dessen Elektroden keine Innenkühlung haben. In Fig. 2 ist das Aufbauschema der Vorrichtung mit Reaktor dargestellt, der eine gekühlte Anode hat, die in den offenen Wärmeregulierungskreis der Baugruppen der Vorrichtung einbezogen ist.

Die Vorrichtung enthält den Reaktor 1 mit koaxial angeordneten Elektroden, der Anode 2, der Kathode 3, und dem Diaphragma 4. Die verfahrenstechnische Kette der anodischen Synthese der Oxidationsmittel wird dargestellt durch den Anodenraum 5 des Reaktors 1, dessen Eingang über das Rückschlagventil 6 mit dem Ausgang der Überdruckdosierpumpe 7 verbunden ist, deren Eingang mit dem Filter 8 verbunden ist, der in einen Behälter mit der Ausgangssalzlösung 9 getaucht ist.

Der Ausgang des Anodenraums 5 ist mit einem Stabilisierungsdruckregler 10 für gasförmige Produkte der elektrochemischen anodischen Zersetzung der Salzlösung 9verbunden. An der Zuführungsleitung für die Produkte der anodischen Synthese zum Stabilisierungsdruckregler 10 ist ein Manometer 11 installiert, das gegen chemisch aggressive Medien durch ein Trennelement 12 geschützt ist.

Der Ausgang des Stabilisierungsdruckreglers 10 für das Gas ist mit dem Eingang einer Mischvorrichtung 13 für gasförmige Produkte der anodischen Synthese mit dem Süßwasserstrom verbunden.

Den Kathodenkreis der Vorrichtung bildet der Kathodenraum 14, dessen Eingang mit dem Ausgang des Katholyts aus dem Wärmetauscher 15 verbunden ist. Der Eingang des Katholyts in den Wärmetauscher 15 ist mit dem Ausgang einer Rücklaufförderpumpe 16 verbunden, die mit einer Überlaufvorrichtung 17 für den Flüssigkeitsrücklauf bei Abschaltung oder kurzzeitigem Stillstand der Vorrichtung versehen ist. Der Eingang der Pumpe 16 ist mit dem unteren Austrittsstutzen eines Annahmebehälters eines Separators 18 zur Trennung des Wasserstoffs vom Katholyt verbunden. Dieser Annahmebehälter hat einen unteren Ablaufstutzen zur Entleerung des Behälters, einen mittleren Überlaufstutzen für die Ableitung des überschüssigen Katholyts, einen oberen Stutzen für die Ableitung des Wasserstoffs und einen Stutzen für die Zuführung des Katholyts mit Wasserstoff aus dem Kathodenraum 14 des elektrochemischen Reaktors 1, der entsprechend mit dem Ausgang des Kathodenraums 14 verbunden ist.

Im Ableitungsstrang des Wasserstoffs ist ein Feuchtigkeitsabscheider 19 angeordnet, der für die Entnahme des Kondensationswassers aus dem Wasserstoff bestimmt ist, das vorrangig freie Hydroxylgruppen enthält. Der Ausgang der Kondensationskammer des Feuchtigkeitsabscheiders 19 des Wasserstoffs ist über eine Dosierpumpe 20 mit der Zuleitung des Kühlwassers zur Mischvorrichtung 13 für gasförmige Oxidationsmittel mit dem Süßwasserstrom verbunden.

Das Süßwasser, aus dem die polyvalenten Metallionen entfernt wurden, wird zur Vorrichtung an den Eingang des Wasserstoff-Feuchtigkeitsabscheiders 19 über einen mechanischen Filter 21, ein elektromagnetisch normal geschlossenes Ventil 22, einen Stabilisierungsdruckregler 23 «Nach der Voreinstellung» und einen Durchflusswächter 24 geführt. Das Kühlwasser wird nach dem Austritt aus dem Wasserstoff-Feuchtigkeitsabscheider 19 an den Eingang des Katholyt-Wärmetauschers 15 geführt, danach gelangt es vom Ausgang des Wärmetauschers 15 an den Eingang der Mischvorrichtung 13 für die gasförmigen Produkte der anodischen Synthese mit dem Süßwasserstrom.

In Fig. 2 ist ein zusätzliches Element des Kühlsystems dargestellt, nämlich die gekühlte Anode 2 des Reaktors 1, die für das Kühlwasser zwischen Wasserstoff-Feuchtigkeitsabscheider 19 und Katholyt-Wärmetauscher 15 angeordnet ist.

Die Vorrichtung funktioniert folgendermaßen.

In den Behälter 9 wird die Natriumchlorid-Ausgangslösung, die mit gereinigtem (weichgemachtem) oder destillierten Wasser und chemisch reinem Salz hergestellt wird, gefüllt. In den Annahmebehälter des Separators 18 wird zwecks Trennung des Wasserstoffs vom Katholyt destilliertes Wasser über den Stutzen für die Wasserstoffableitung gefüllt. Dies ist ein einmaliger Vorgang nur bei Erstinbetriebnahme der Vorrichtung. Es werden verbunden: Wasserzuleitungsstutzen am Eingang des mechanischen Filters 21 mit der Süß-(Trink-)Wasser-Druckleitung. Die Vorrichtung wird durch Beaufschlagung des normal geschlossenen elektromagnetischen Ventils 22 mit Spannung eingeschaltet. Das Wasserdurchsatzvolumen über die Vorrichtung wird mit einem Stabilisierungsdruckregler 23 «Nach der Voreinstellung» geregelt, indem der Soll-Wert eingestellt wird. Der Wasserstrom, der über den Strömungswächter 24 fließt, löst ihn aus und schaltet die Pumpen 16, 20 bzw. 7 und die Stromversorgungseinheit des elektrochemischen Reaktors 1 (in Fig. 1 und 2 nicht dargestellt) ein. Nach dem Befüllen des Anodenraums 5 mit Salzlösung wird der Druck im Anodenraum 5 mit dem Stabilisierungsgasdruckregler 10 «Bis zur Voreinstellung» geregelt, indem der Soll-Wert mittels Manometer 11 eingestellt und kontrolliert wird. Das destillierte Wasser wird während des Umlaufs im Kathodenkreislauf mit Natriumionen angereichert, die über das poröse Keramikdiaphragma 4 im Reaktor 1 aus der Salzlösung, die den Anodenraum füllt, selektiert werden. Der Volumendurchsatz an Salzlösung, die in den Anodenraum 5 des Reaktors 1 gelangt, wird so gewählt, dass am Ausgang des Anodenraums 5 nur Gas gewonnen wird, das vor allem durch Chlor mit einer geringen Menge Chlordioxid, Sauerstoff und Ozon repräsentiert wird. Dieses Gas ist mit Wasser gesättigt, dessen Mikrotröpfchen Wasserstoffperoxid und weitere metastabile Hydroperoxidverbindungen enthalten.

Im elektrochemischen Reaktor 1 ist die Freisetzung von molekularem Chlor im Anodenraum 5 und die Bildung von Natriumhydroxid im Kathodenraum 14 die entscheidende Reaktion:

NaCl + H₂O - e → NaOH + 0,5 H₂ + 0,5 Cl₂.

Zugleich verläuft im Anodenraum 5 mit geringerer Stromausbeute die Synthesereaktion von Chlordioxid unmittelbar aus der Salzlösung sowie aus Salzsäure, die bei der Auflösung von molekularem Chlor in Anodennähe gebildet wird:

(Cl₂ + H₂O ↔ HOCl + HCl):

2NaCl + 6H₂O - 10e → 2ClO₂ + 2NaOH + 5 H₂;

HCl + 2H₂O - 5e → ClO₂ + 5 H˙.

Im Anodenraum 5 des Reaktors 1 wird Ozon durch direkte Zersetzung von Wasser und durch Oxidation von freiwerdendem Sauerstoff gebildet:

3H₂O - 6e → O₃ + 6H˙; 2H₂O - 4e → 4H˙ + O₂; ⇒ O₂ + H₂O - 2e → O₃ + 2 H˙.

Mit geringer Stromausbeute verläuft die Bildung von aktiven Sauerstoffverbindungen:

H₂O - 2e → 2H˙ + O˙; H₂O - e → HO^{•} + H˙; 2H₂O - 3e → HO₂ + 3H˙.

Bei der Auflösung des gasförmigen Produkts der anodischen Oxidation der Natriumchloridlösung in Wasser läuft üblicherweise eine Reaktion ab, die durch folgende Gleichung ausgedrückt werden kann:

Cl₂ + H₂O ↔ HOCl + HCl.

Bekanntlich ist das wichtigste antimikrobielle Mittel unterchlorige Säure, deren mengenmäßiger Gehalt in der Lösung durch den verringerten pH-Wert im Ergebnis der Bildung von Salzsäure begrenzt wird. Der pH-Wert kann durch Zugabe von Lauge, d. h., z. B. Natriumhydroxid, verändert werden. Dies führt allerdings zur Bildung von schädlichen (Natriumchlorid) und gering reaktionsfähigen (Natriumhypochlorid) Produkten. Natriumhypochlorid, das ein Salz einer schwachen Säure (unterchlorige Säure) und einer starken Base (Natriumhydroxid) ist, verfügt über eine antimikrobielle Aktivität, die gegenüber der unterchlorigen Säure nur 1/250 bis 1/350 von deren Aktivität ausmacht.

HOCl + HCl + 2NaOH → NaOCl + NaCl + 2H₂O.

Die Bildung von Natriumhypochlorid bei gleichzeitiger Erhöhung des pH-Wertes mit gleichzeitiger Erhöhung der Konzentration der unterchlorigen Säure kann durch die Zugabe von Wasser zur Reaktionszone vermieden werden, das freie Hydroxylgruppen enthält, die sich bei der Kondensation von Wasser aus Wasserstoff bilden, der im Kathodenraum 14 des elektrochemischen Reaktors 1 abgeschieden wird,:

Cl₂ + H₂O + OH⁻ ↔ 2HOCl.

Das Kondensat aus dem Wasserstoff-Feuchtigkeitsabscheider 19 wird mit Hilfe der Pumpe 20 in das durchfließende Wasser gegeben, was zum Durchfluss einer überkonzentrierten unterchlorigen Säure und zu einer erheblichen Verringerung der Konzentration der Natriumionen im gewonnenen Produkt, der Oxidationsmittellösung, beiträgt, die sich im Mischer 13 bei der Auflösung der gasförmigen Produkte der anodischen Synthese im durchfließenden Süßwasser bildet. Dabei liegt der pH-Wert des entstehenden Produkts im Bereich 5,0 - 6,5.

Bei Stillsetzen des elektrochemischen Systems durch Schließung des Ventils 22 schalten die Pumpen 7, 16 und 20 sowie die Stromversorgung des elektrochemischen Reaktors 1 ab. Dabei strömt der Katholyt aus dem Kathodenraum 14 durch die Schwerkraft in den Annahmebehälter des Separators 18 dank der Überlaufvorrichtung 17. Der überschüssige Katholyt aus dem Annahmebehälter des Separators 18 wird dabei in die Entwässerungsleitung durch den Überlaufstutzen im oberen Teil des Annahmebehälters (D) abgelassen. Der im Anodenraum 5 verbliebene Anolyt mit einem pH-Wert von unter 3 wird durch den Überdruck über das Diaphragma 4 gefiltert und löst dabei die Hydroxid-Ablagerungen der polyvalenten Metalle auf, die in geringen Mengen in der Ausgangssalzlösung vorkommen können. Bei der anschließenden Inbetriebnahme der Vorrichtung beginnen sämtliche stromverbrauchenden Teile gleichzeitig im vorher festgelegten Modus zu arbeiten, wobei sie eine schnelle, wenige Sekunden dauernde Stabilisierung des Prozesses sicherstellen. Beim Transport der Vorrichtung wird der Katholyt aus dem Annahmebehälter des Separators 18 in die Entwässerungsleitung mittels Auslassstutzen (D) mit einem im Boden des Behälters angeordneten Ventil abgelassen.

Die Erprobung der Vorrichtung erfolgte im Vergleich mit dem Prototyp, der nach dem Patent US 7,897,023 B2 hergestellt wurde. Beide vergleichbare Vorrichtungen enthielten einen elektrochemischen Reaktor, der durch ein elektrochemisches modulares Element (Zelle) gemäß GB 2479286 B (elektrochemische Zelle Nr. 5, Tabelle 2) repräsentiert wird. Die Ausgangssalzlösung enthielt 250 g/l Natriumchlorid, der Gehalt an Chloriden und Kalzium- und Magnesiumsulfaten in der Ausgangslösung betrug 0,2 mg/l. Die Ausgangslösung wurde im Betreib der beiden vergleichbaren Vorrichtungen eingesetzt. Die Versuche erfolgten bei einer Temperatur der Umgebungsluft von 20 °C, einer Temperatur der Ausgangssalzlösung von 20 °C, einer Temperatur des Leitungstrinkwassers von 15 °C und bei gleicher Temperatur der elektrochemischen Zellen von 30 °C. Dabei lag die Stromstärke über den elektrochemischen Reaktor 1 im Prototyp der Vorrichtung bei 6 A bei einer Spannung von 6 V, in der Vorrichtung gemäß der neuen technischen Lösung bei 16 A und 5 V. Dementsprechend betrug die Ausbeute an Oxidationsmitteln im Prototyp 6,0 g/h, in der Vorrichtung gemäß der neuen technischen Lösung 20,5 g/h. Die Oxidationsmittellösung, die im Prototyp mit einer Geschwindigkeit von 12 l/h hergestellt wurde, hatte eine Oxidationsmittelkonzentration von 500 mg/l bei einem pH-Wert von 2,8 und einem Gesamtmineralgehalt von 0,96 g/l. Bei dosierter Zugabe des Katholyts, der sich bei der Synthese der Oxidationsmittellösung bildet, erhöhte sich der pH-Wert am Ausgang auf 6,0 bei gleichzeitiger Erhöhung des Mineralgehalts der Lösung auf 1,5 g/l. Die Oxidationsmittellösung, die mit einer Geschwindigkeit von 41 l/h in der Vorrichtung nach der neuen technischen Lösung hergestellt wird, hatte einen pH-Wert von 3,1 bei einer Oxidationsmittelkonzentration von 500 mg/l und einem Gesamtmineralgehalt von 0,67 g/l. Bei der Zuführung des Kondensats aus dem Wasserstoff-Feuchtigkeitsabscheider 19 an den Eingang der Mischvorrichtung 13 erhöhte sich der pH-Wert der Oxidationsmittellösung auf 6,0 bei gleichzeitiger Erhöhung des Mineralgehalts auf 0,72 g/l.

Die Zeit für das Erreichen des Betriebszustands nach Stillstand der Prototyp-Vorrichtung betrug 5 Minuten gegenüber 25 Sekunden für das Erreichen des Betriebszustands der Vorrichtung gemäß der neuen technischen Lösung. Bei der Zuführung von Kühlwasser in den Anodenraum 5 (gemäß Schema in Fig. 2) erreichte die Stromstärke über den Reaktor bei unveränderter Temperatur (30 °C) 20 A bei einer Spannung von 6 V, was von einer entsprechenden Erhöhung der Leistung der Vorrichtung bezogen auf das Endprodukt, der Oxidationsmittellösung, auf 52 Liter pro Stunde mit den oben genannten Parametern einherging.

## Patentansprüche

1. Vorrichtung zur Gewinnung von Produkten der Elektrolyse einer Alkalimetallchloridlösung, umfassend:
einen elektrochemischen Reaktor (1), der von einer oder mehreren modularen elektrochemischen Zellen repräsentiert wird, die hydraulisch parallel geschaltet sind, wobei ein Anodenraum (5) und ein Kathodenraum (14) des Reaktors (1) durch ein poröses röhrenförmiges keramisches Diaphragma (4) geteilt sind, das koaxial zwischen Elektroden (2, 3) der modularen elektrochemischen Zellen angeordnet ist,
eine Vorrichtung für die Zuführung von Salzlösung (9) unter Druck, die mit einem Eingang des Anodenraums (5) verbunden ist,
eine Vorrichtung (10) zur Stabilisierung eines vorgegebenen Überdrucks im Anodenraum (5), die mit einem Ausgang des Anodenraums (5) verbunden ist,
eine Mischvorrichtung (13) für gasförmige Produkte der anodischen elektrochemischen Reaktion mit Süßwasserstrom, die mit der Vorrichtung (10) zur Stabilisierung des vorgegebenen Überdrucks im Anodenraum (5) verbunden ist,
einen Katholytkreislauf, der den Kathodenraum (14) des elektrochemischen Reaktors (1), einen kapazitiven Separator (18) für die Trennung von Wasserstoff vom Katholyt, eine Einrichtung zur Ableitung des überschüssigen Katholyts aus einem Annahmebehälter des Separators (18) und einen Wärmetauscher (15) zur Kühlung des umlaufenden Katholyts enthält, und
eine Dosierpumpe (20) für die Zugabe des Katholyts zur Oxidationsmittellösung zwecks Regulierung ihres pH-Wertes,
**dadurch gekennzeichnet, dass**
im Katholytkreislauf eine Umlaufpumpe (16) mit Überlaufvorrichtung (17) für den Rücklauf der Pumpflüssigkeit einbegriffen ist, die den Zwangsumlauf des Katholyts kontinuierlich über den Wärmetauscher (15), den Kathodenraum (14) und den kapazitiven Separators (18) zur Trennung des Wasserstoffs vom Katholyt sicherstellt,
der Annahmebehälter des Separators (18), der mit dem Pumpeneingang verbunden ist, tiefer liegt als der elektrochemische Reaktor (1), und zwar so, dass der Pegel des Katholyts im Annahmebehälter des Separators (18), der durch die Lage des Stutzens (Ansatzrohrs) für die Ableitung des überschüssigen Katholyts aus dem Kreislauf bestimmt wird, unter dem Einlaufstutzen aus dem Kathodenraum (14) des elektrochemischen Reaktors (1) liegt, und
in der Ableitung des Wasserstoffs aus dem kapazitiven Separator (18) ein gekühlter Feuchtigkeitsabscheider (19) installiert ist, dessen Kondensatsammelbehälter über die Dosierpumpe (20) mit der Zuleitung des Süßwassers zur Mischvorrichtung (13) des Süßwasserstroms mit der gasförmigen Oxidationsmittelmischung verbunden ist.

2. Vorrichtung gemäß Anspruch 1, **dadurch gekennzeichnet, dass** die Anode (2) im elektrochemischen Reaktor (1) mit Kühlung ausgeführt ist und in einem offenen Kühlkreis der Elemente der Vorrichtung nach einem Wärmetauscher des Feuchtigkeitsabscheiders (19) und vor dem Wärmetauscher (15) des Katholyts angeordnet ist, wobei das aus dem Kühlkreis austretende Wasser mit einem Eingang zur Mischvorrichtung (13) für gasförmige Produkte der anodischen elektrochemischen Reaktion mit Süßwasserstrom verbunden ist.

## Claims

1. Apparatus for recovering products of the electrolysis of an alkali metal chloride solution, comprising:
an electrochemical reactor (1) represented by one or more modular electrochemical cells hydraulically connected in parallel, wherein an anode compartment (5) and a cathode compartment (14) of the reactor (1) are divided by a porous tubular ceramic diaphragm (4) coaxially arranged between electrodes (2, 3) of the modular electrochemical cells,
a device for supplying saline solution (9) under pressure connected to an inlet of the anode compartment (5),
a device (10) for stabilising a predetermined overpressure in the anode compartment (5), which is connected to an outlet of the anode compartment (5),
a mixing device (13) for gaseous products of the anodic electrochemical reaction with fresh water flow, which is connected to the device (10) for stabilising the predetermined overpressure in the anode compartment (5),
a catholyte circuit comprising the cathode compartment (14) of the electrochemical reactor (1), a capacitive separator (18) for separating hydrogen from the catholyte, means for discharging the excess catholyte from a receiving tank of the separator (18) and a heat exchanger (15) for cooling the circulating catholyte, and
a dosing pump (20) for adding the catholyte to the oxidant solution to regulate its pH,
**characterised in that**
the catholyte circuit includes a circulation pump (16) with overflow device (17) for the return of the pumping liquid, which ensures the forced circulation of the catholyte continuously through the heat exchanger (15), the cathode chamber (14) and the capacitive separator (18) for the separation of the hydrogen from the catholyte,
the receiving tank of the separator (18) connected to the pump inlet is lower than the electrochemical reactor (1), such that the level of the catholyte in the receiving tank of the separator (18), which is determined by the position of the spigot (attached pipe) for the discharge of the excess catholyte from the circuit, is below the inlet spigot from the cathode compartment (14) of the electrochemical reactor (1), and
a cooled moisture separator (19) is installed in the discharge of the hydrogen from the capacitive separator (18), the condensate collecting tank of which is connected via the metering pump (20) to the feed line of the fresh water to the mixing device (13) of the fresh water flow with the gaseous oxidant mixture.

2. Apparatus according to claim 1, **characterised in that** the anode (2) in the electrochemical reactor (1) is provided with cooling and is arranged in an open cooling circuit of the elements of the apparatus downstream of a heat exchanger of the moisture separator (19) and upstream of the heat exchanger (15) of the catholyte, the water leaving the cooling circuit being connected to an inlet to the mixing device (13) for gaseous products of the anodic electrochemical reaction with fresh water flow.

## Revendications

1. Dispositif pour l'obtention de produits de l'électrolyse d'une solution de chlorure de métal alcalin, comprenant :
un réacteur électrochimique (1) représenté par une ou plusieurs cellules électrochimiques modulaires connectées hydrauliquement en parallèle, dans lequel un compartiment anodique (5) et un compartiment cathodique (14) du réacteur (1) sont divisés par un diaphragme céramique tubulaire poreux (4) disposé coaxialement entre des électrodes (2, 3) des cellules électrochimiques modulaires,
un dispositif d'alimentation en solution saline (9) sous pression, relié à une entrée du compartiment anodique (5),
un dispositif (10) pour stabiliser une surpression prédéterminée dans le compartiment anodique (5), qui est relié à une sortie du compartiment anodique (5),
un dispositif de mélange (13) pour des produits gazeux de la réaction électrochimique anodique avec un courant d'eau douce, qui est relié au dispositif (10) pour stabiliser la surpression prédéterminée dans le compartiment anodique (5),
un circuit de catholyte qui comprend le compartiment cathodique (14) du réacteur électrochimique (1), un séparateur capacitif (18) pour la séparation de l'hydrogène du catholyte, un dispositif pour évacuer le catholyte en excès d'un réservoir de réception du séparateur (18) et un échangeur de chaleur (15) pour refroidir le catholyte en circulation, et
une pompe de dosage (20) pour ajouter le catholyte à la solution d'oxydant afin de réguler son pH,
**caractérisé en ce que**
dans le circuit de catholyte est incluse une pompe de circulation (16) avec dispositif de trop-plein (17) pour le retour du liquide de pompage, qui assure la circulation forcée du catholyte en continu à travers l'échangeur de chaleur (15), le compartiment cathodique (14) et le séparateur capacitif (18) pour la séparation de l'hydrogène du catholyte,
le réservoir de réception du séparateur (18), qui est relié à l'entrée de la pompe, est situé plus bas que le réacteur électrochimique (1), de telle sorte que le niveau de catholyte dans le réservoir de réception du séparateur (18), qui est déterminé par la position de la tubulure (tube de connexion) pour l'évacuation de l'excès de catholyte hors du circuit, est inférieur à la tubulure d'entrée provenant du compartiment cathodique (14) du réacteur électrochimique (1), et
dans l'évacuation de l'hydrogène du séparateur capacitif (18) est installé un séparateur d'humidité refroidi (19) dont le collecteur de condensat est relié par la pompe de dosage (20) à la conduite d'amenée de l'eau douce au dispositif de mélange (13) du courant d'eau douce avec le mélange gazeux d'agents oxydants.

2. Dispositif selon la revendication 1, **caractérisé en ce que** l'anode (2) est réalisée dans le réacteur électrochimique (1) avec refroidissement et est disposée dans un circuit ouvert de refroidissement des éléments du dispositif en aval d'un échangeur de chaleur du séparateur d'humidité (19) et en amont de l'échangeur de chaleur (15) du catholyte, l'eau sortant du circuit de refroidissement étant reliée à une entrée du dispositif de mélange (13) des produits gazeux de la réaction électrochimique anodique avec un courant d'eau douce.
